# EUROPEAN PATENT SPECIFICATION

(11) **EP 0 493 954 B1**
(45) Date of publication and mention of the grant of the patent: **12.04.1995**
(21) Application number: 91311930.1
(22) Date of filing: 23.12.1991
(51) Int. Cl.: F16J 15/08, F02F 11/00

(54) **Steel laminate type cylinder head gasket**
Zylinderkopfdichtung aus Schichtstahl
Joint de culasse en acier stratifié

(30) Priority: 21.12.1990 JP 401395/90 U; 21.12.1990 JP 401396/90 U; 21.12.1990 JP 401397/90 U
(43) Date of publication of application: 08.07.1992
(73) Proprietor: ISHIKAWA GASKET CO. LTD., Tokyo (JP)
(72) Inventor: Miyaoh, Yoshio, c/o Ishikawa Gasket C., Ltd., Adachi-ku, Tokyo (JP)
(74) Representative: Goddard, David John

(56) References cited:
- JP-A-59 090 745
- US-A- 4 791 897
- US-A- 4 803 965
- US-A- 4 809 653

## Description

### Background of the Invention and Related Art Statement

The present invention relates to a steel laminate type cylinder head gasket for an internal combustion engine with an auxiliary combustion chamber.

In an engine with an auxiliary combustion chamber, a cylinder head is provided with a mouth plate to close the auxiliary combustion chamber. When the engine is operated, gas at first combusts at the auxiliary combustion chamber, and then gas at a cylinder bore combusts. Therefore, the mouth plate receives combustion pressure from both the auxiliary combustion chamber and the cylinder bore.

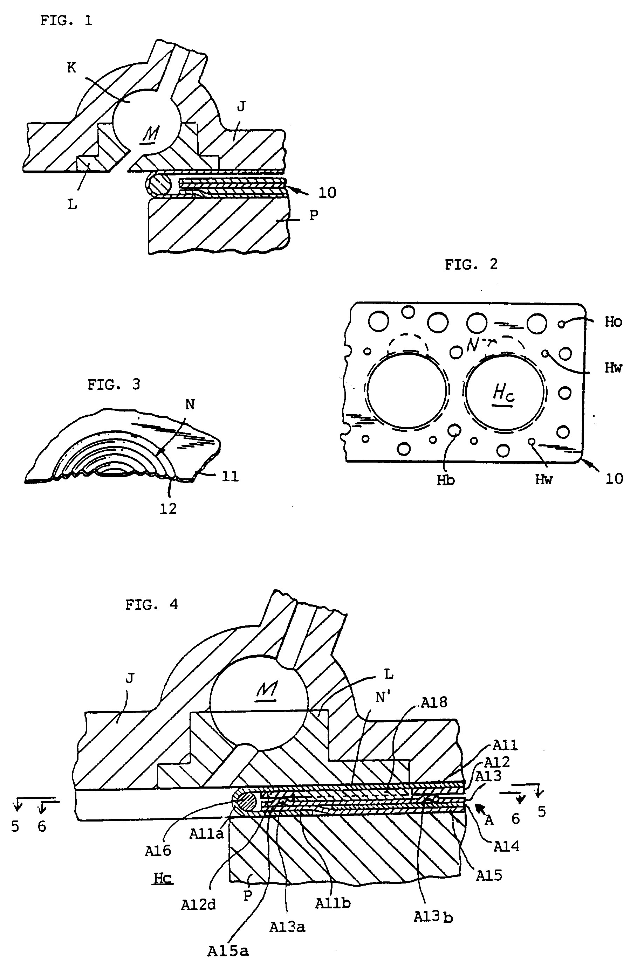

As shown in Figs. 1 and 2, a cylinder head J is provided with a depression K, to which a mouth plate L is inserted, so that an auxiliary combustion chamber M is defined inside the depression K. A gasket 10 is installed between the cylinder head J and a cylinder block P to seal therebetween. The mouth plate L is supported partly by a portion N of the gasket 10.

As stated above, when the engine is operated, combustion pressure is applied to the mouth plate L, so that large pressure is applied to the portion N of the gasket. Sometimes, the mouth plate L moves up and down.

In the conventional steel laminate gasket 10 as shown in Figs. 1 and 2, the gasket 10 is formed of an upper plate, lower plate and three middle plates. A wire ring is installed around the cylinder bore Hc. Since the gasket 10 does not resiliently support the mouth plate, combustion gas is liable to leak through the mouth plate.

In order to resiliently support the mouth plate, one of the middle plate is replaced by a plate 11 with beads 12 at the portion N of the gasket, which is disclosed in Japanese Patent Publication (KOKAI) No. 59-90745.

In U.S. Patent No. 4,791,897, No. 4,803,965 and No. 4,809,653, one of the middle plates is provided with different kind of beads on and around the portion N to support the mouth plate L and seal therearound.

The gaskets as proposed by the patents operate as intended. However, in case the portion N of the gasket need not be compressed strongly by beads, the portion of the middle plate where the beads are formed is cut, to which a compressible material is disposed for supporting the mouth plate L.

When the engine is started, large force is applied to the mouth plate L to thereby strongly compress the compressible material, the wire ring and a cured portion around the wire ring under the mouth plate L. This force is concentrated at a border between the mouth plate and the cylinder head, which results in damaging the curved portion around the wire ring. The curved portion may be broken or partly cut by the force applied to the mouth plate L.

Accordingly, one object of the invention is to provide a steel laminate type cylinder head gasket, which can securely support a mouth plate even if high pressure is applied to the mouth plate.

Another object of the invention is to provide a steel laminate type cylinder head gasket as stated above, which can securely seal around the cylinder bore and the mouth plate while resiliently supporting the mouth plate.

A further object of the invention is to provide a steel laminate type cylinder head gasket as stated above, which can be easily and economically manufactured.

Further objects and advantages of the invention will be apparent from the following description of the invention.

### Summary of the Invention

According to the present invention there is provided a steel laminate type cylinder head gasket to be installed in an internal combustion engine between a cylinder block with a cylinder bore and a cylinder head with an auxiliary combustion chamber, a mouth plate being attached to the cylinder head for closing said auxiliary combustion chamber and being partly supported by a portion of the gasket, the gasket comprising:
an upper plate having a downwardly curved portion surrounding the cylinder bore, a first middle plate and a second plate,
sealing means provided in the downwardly curved portion of said upper plate to surround the cylinder bore and seal said bore,
the first middle plate extending substantially throughout an entire area of the gasket, said first middle plate having a first hole corresponding to the cylinder bore of the engine,
the second plate being adjacent under said first middle plate with a hole corresponding to the cylinder bore and having a bead extending at least partly around the cylinder bore,
said gasket being characterized in that:
the first middle plate has a second hole situated adjacent to the first hole under a part of the mouth plate, said second hole being defined by a first curved outer line located adjacent to and at a predetermined distance away from the contour of the mouth plate and a second inner line located adjacent to and at a predetermined distance away from the cylinder bore to thereby form an elongated strip between the first and second holes, the second plate is placed under the first middle plate,
a compressible member is placed in the second hole to support the mouth plate, and
said elongated strip, sealing means and compressible member constitute means for supporting the mouth plate near the cylinder bore.

The elongated strip is defined between the first and second holes. The elongated strip may be integrally formed with the first middle plate, or separately formed therewith. The supporting means for the mouth plate is situated on or around the elongated strip.

The upper plate is situated above the first middle plate and includes a curved portion situated around a third hole for the cylinder bore, and a flange extending in a direction away from the third hole. Also, the second plate is situated under the first middle plate. The flange of the upper plate is located under an edge portion of a hole of the second plate. A wire ring is used as the sealing means, and is located between the curved portion and the first middle plate.

In the present invention, the supporting means for the mouth plate is situated near the sealing means so that the supporting means and the sealing means support the mouth plate near the cylinder bore. The supporting means may be a thin metal plate having a size at least equal to a size of the elongated strip, and is laminated over the elongated strip. The thin metal plate may extend around the cylinder bore entirely.

The second plate may include a bead situated under the elongated strip for supporting the same. In this case, the bead and the elongated strip constitute the supporting means. The bead may extend around the cylinder bore and/or the second hole to seal therearound.

In case the elongated strip is formed separately from the first middle plate, the elongated strip is made of a thick metal plate thicker than the first metal plate. The thick metal plate constitutes the supporting means for the mouth plate.

In the present invention, the supporting means is situated between the sealing means and the compressible member. Therefore, in case the mouth plate is strongly urged against the gasket when the engine is started, the gasket is not damaged at all. Also, since the compressible member is situated in the second hole, the mouth plate is supported at a moderate pressure when the gasket is tightened.

### Brief Description of the Drawings

Fig. 1 is an explanatory section view of a conventional gasket installed between a cylinder head and a cylinder block;
Fig.2 is a plan view of a part of the conventional gasket shown in Fig. 1;
Fig. 3 is a perspective view of a part of a middle plate used in a conventional gasket;
Fig. 4 is an explanatory section view of a first embodiment of a steel laminate gasket of the invention installed between a cylinder head and a cylinder block;
Fig. 5 is a section view taken along line 5-5 in Fig. 4;
Fig. 6 is a section view taken along line 6-6 in Fig. 4;
Fig. 7 is a section view, similar to Fig. 5, for showing a second embodiment of the invention;
Fig. 8 is a section view, similar to Fig. 4, for showing the second embodiment of a steel laminate gasket of the invention;
Fig. 9 is a section view, similar to Fig. 5, for showing a third embodiment of the invention;
Fig. 10 is a section view, similar to Fig. 5, for showing a fourth embodiment of the invention; and
Fig. 11 is a section view, similar to Fig. 4, for showing the fourth embodiment of the invention.

### Detailed Description of Preferred Embodiments

Referring to Figs. 4-6, a first embodiment A of a steel laminate type cylinder head gasket of the invention is shown. The gasket A includes a plurality of cylinder bores Hc, water holes Hw, oil holes Ho, bolt holes Hb and so on, as in the conventional gasket shown in Fig. 2. Since the present invention is directed to a sealing mechanism around the cylinder bore Hc, sealing means for sealing around other holes is not explained. Any sealing means may be used for sealing around other holes.

The gasket A of the invention is installed between a cylinder head J and a cylinder block P. The cylinder head J includes a mouth plate L to form an auxiliary combustion chamber M therein. The mouth plate L is supported by the gasket A at a portion N'.

The gasket A is formed of an upper plate A11, three middle plates A12, A13, A14 and a lower plate A15, which extend substantially throughout the entire area of the engine. A wire ring A16 is situated around the cylinder bore Hc.

The upper plate A11 includes a curved portion A11a to define the cylinder bore Hc, and a flange A11b extending from the curved portion A11a. The wire ring A16 is situated adjacent to the curved portion A11a.

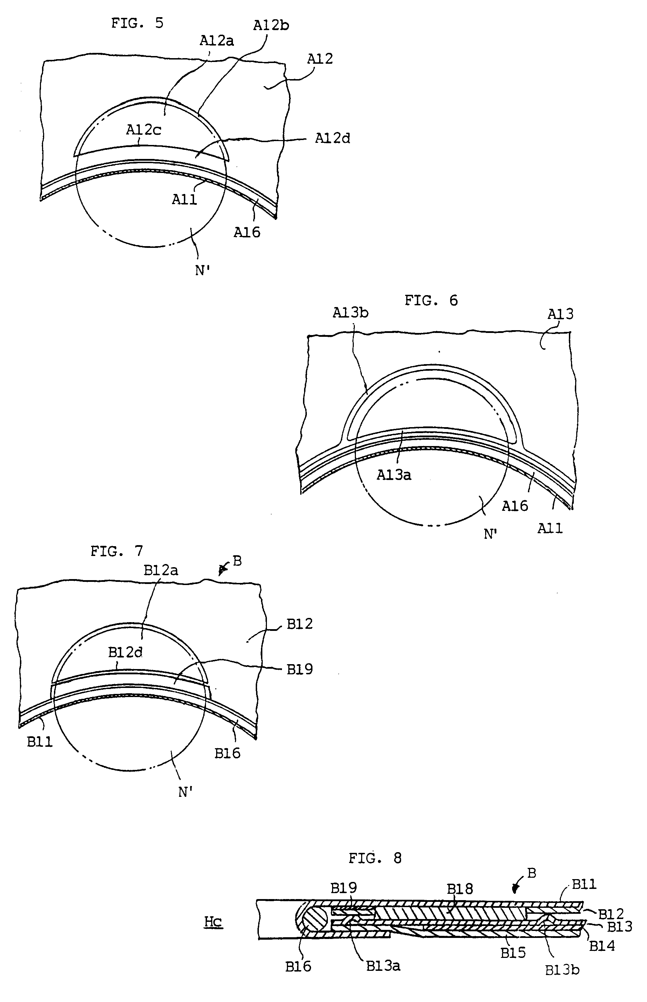

As shown in Fig. 5, the first middle plate A12 includes a hole A12a near the cylinder bore Hc. The hole A12a is defined by an outer line A12b larger than a part of a contour of the mouth plate L, and an inner line A12c located at a predetermined distance away from the cylinder bore Hc. A curved elongated portion A12d is, therefore, formed in the first middle plate A12 between the cylinder bore Hc and the hole A12a.

A compressible sheet A18 made of graphite is situated in the hole A12a. The thickness of the compressible sheet A18 is greater than that of the plate A12. When the gasket A is tightened, the compressible sheet A18 is compressed to slightly resiliently support the mouth plate L. The compressible sheet A18 does not substantially flow outside the hole A12a.

The second or middle plate A13 is situated under the first middle plate A12 to support the compressible sheet A18 thereon. As shown in Fig. 6, the middle plate A13 includes a bead A13a around the cylinder bore Hc and a bead A13b outside a portion corresponding to the hole A12a. Therefore, the beads A13a, A13b surround the compressible sheet A18 under the middle plate A12 to seal therearound. Particularly, the bead A13a supports the mouth plate L together with the elongated strip A12d.

The middle plate A14 is situated under the second or middle plate A13, and includes a relatively large hole around the cylinder bore Hc. The middle plate A14 does not overlap the flange A11b. The lower plate A15 is situated under the middle plate A14, and an edge portion A15a of the lower plate A15 is located above the flange A11b.

When the gasket A is situated between the cylinder head J and the cylinder block P and is tightened, the wire ring A16, the beads A13a, A13b and the compressible sheet A18 are compressed. The mouth plate L is slightly resiliently supported by the compressible sheet A18. The bead A13a and the wire ring A16 seal around the cylinder bore Hc and support the mouth plate L, while the beads A13a, A13b seal around the compressible sheet A18.

In the gasket A, the elongated portion A12d is formed between the hole A12a and the cylinder bore Hc, and the bead A13a is located under the elongated portion A12d to extend beyond a portion that the mouth plate L sits. Therefore, the mouth plate L is supported by the elongated portion A12d, the bead A13a and the wire ring A16 as well as the upper plate A11.

Accordingly, even if large force is formed and applied to the mouth plate L when the engine is started or operated, such large force is well supported by the gasket A, especially the elongated portion A12d, the bead A13a and the compressible sheet A18. Therefore, when the engine is started or operated, the mouth plate L does not substantially move, so that the upper plate A11 is not damaged by the mouth plate L. Leakage of combustion gas through the mouth plate L is also prevented.

In the gasket A, the bead A13a extends entirely around the cylinder bore Hc, but the bead A13a may extend partly around the cylinder bore Hc to only surround the hole A12a together with the bead A13b. Leakage through the mouth plate L is also effectively prevented.

Figs. 7 and 8 show a second embodiment B of a steel laminate type cylinder head gasket of the invention. The gasket B is formed of an upper plate B11, a first middle plate B12 with a hole B12a and an elongated portion B12d, a second or middle plate B13 with beads B13a, B13b, a middle plate B14, a lower plate B15, and a wire ring B16, as in the gasket A.

However, the gasket B further includes an elongated curved member B19 situated on the elongated portion B12d to strengthen the elongated portion B12d. The elongated curved member B19 may be situated on a different place, such as under the bead B13a. The elongated curved member B19 is made of a thin metal plate and extends slightly beyond the mouth plate L.

In the gasket B, the elongated curved member B19, the elongated portion B12d, the wire ring B16 and a compressible sheet B18 support the mouth plate L. The gasket B operate as in the gasket A.

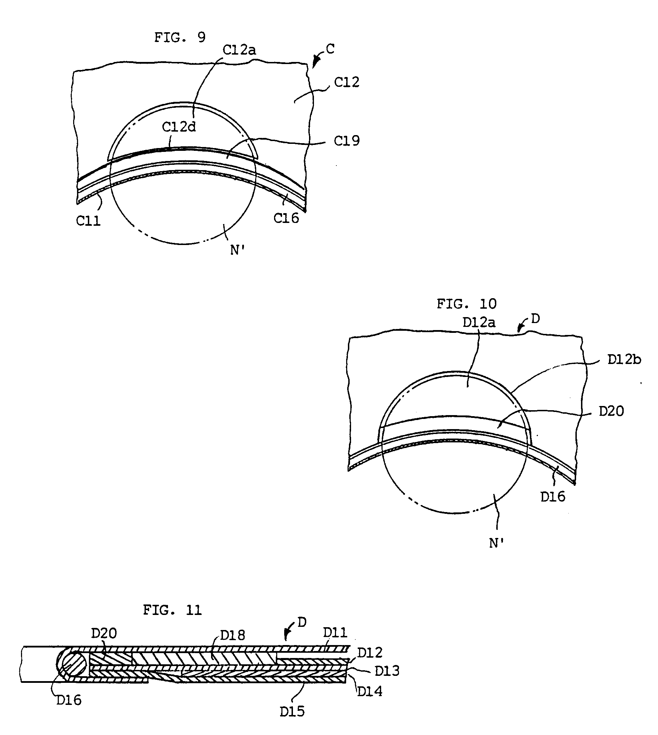

Fig. 9 shows a third embodiment C of a steel laminate type cylinder head gasket of the invention. The gasket C is formed of an upper plate C11, three middle plates C12, C13, C14, a lower plate C15, and a wire ring C16, as in the gasket B. In the gasket C, however, an annular ring C19 is situated above the elongated portion C12d to entirely surround the cylinder bore Hc. In the gasket C, sealing ability around the cylinder bore Hc is improved. The gasket C operates as in the gasket B.

Figs. 10 and 11 show a fourth embodiment D of a steel laminate type cylinder head gasket of the invention. The gasket D is formed of an upper plate D11, three middle plates D12, D13, D14, a lower plate D15, and a wire ring D16, as in the gasket A.

In the gasket D, however, the first middle plate D12 is provided with a hole or concave D12a surrounded by a line D12b only. Namely, there is no elongated portion, like the portion A12d as shown in Fig. 5. Instead, a thick metal member D20 is situated to separate the hole D12a from the cylinder bore Hc.

In the gasket D, the thick metal member D20, the wire ring D16 and a compressible sheet D18 support the mouth plate L. The gasket D operates as in the gasket A.

In the gasket of the present invention, a hole is formed adjacent to a cylinder bore, in which a compressible sheet is provided. A supporting member is formed in an elongated portion or a curved portion between the hole and the cylinder bore to support the mouth plate. Accordingly, force applied to the mouth plate is not concentrated on only one plate or portion, so that an outer plate of the gasket is not substantially damaged by the mouth plate.

While the invention has been explained with reference to the specific embodiments of the invention, the explanation is illustrative and the invention is limited only by the appended claims.

## Claims

1. A steel laminate type cylinder head gasket (A-C) to be installed in an internal combustion engine between a cylinder block (P) with a cylinder bore (Hc) and a cylinder head (J) with an auxiliary combustion chamber (M), a mouth plate (L) being attached to the cylinder head (J) for closing said auxiliary combustion chamber and being partly supported by a portion of the gasket, the gasket (A-C) comprising:
an upper plate (A11; B11; C11) having a downwardly curved portion (A11a) surrounding the cylinder bore, a first middle plate (A12; B12; C12) and a second plate (A13; B13),
a sealing means (A16; B16; C16) provided in the downwardly curved portion (A11a) of said upper plate to surround the cylinder bore and seal said bore,
the first middle plate (A12; B12; C12) extending substantially throughout an entire area of the gasket, said first middle plate having a first hole corresponding to the cylinder bore of the engine (Hc),
the second plate (A13; B13; C13) being adjacent under said first middle plate with a hole corresponding to the cylinder bore (Hc) and having a bead (A13a; B13a) extending at least partly around the cylinder bore,
said gasket (A-C) being characterized in that:
the first middle plate (A12; B12; C12) has a second hole (A12a; B12a; C12a) situated adjacent to the first hole under a part of the mouth plate (L), said second hole being defined by a first curved outer line (A12b) located adjacent to and at a predetermined distance away from the contour of the mouth plate and a second inner line (A12c) located adjacent to and at a predetermined distance away from the cylinder bore to thereby form an elongated strip (A12d; B12d; C12d) between the first and second holes, the second plate (A13; B13; C13) is placed under the first middle plate (A12; B12; C12),
a compressible member (A18; B18) is placed in the second hole (A12a; B12a; C12a) to support the mouth plate, and
said elongated strip (A12d; B12d; C12d), sealing means (A16; B16; C16) and compressible member (A18; B18) constitute means for supporting the mouth plate near the cylinder bore.

2. A steel laminate type cylinder head gasket (A-C) according to claim 1, characterised in that said bead (A13a; B13a) of the second plate (A13; B13; C13) is located under the elongated strip (A12d; B12d; C12d).

3. A steel laminate type cylinder head gasket (A-C) according to either claim 1 or claim 2, characterised in that said bead (A13a; B13a) extends around the entire cylinder bore (Hc).

4. A steel laminate type cylinder head gasket according to any one of preceding claims 1 to 3, characterised in that said sealing means (A16; B16; C16) is a wire ring situated between the curved portion (A11a) and the first middle plate (A12; B12; C12).

5. A steel laminate type cylinder head gasket (B; C) according to any one of the preceding claims 1 to 4, characterised by further comprising a thin metal plate (B19; C19) having a size at least equal to a size of the elongated strip (B12d; C12d), said thin metal plate (B19; C19) being laminated over the elongated strip.

6. A steel laminate type cylinder head gasket (C) according to claim 5, characterised in that said thin metal plate (C19) extends around the entire cylinder bore (Hc).

7. A steel laminate type cylinder head gasket (D) to be installed in an internal combustion engine between a cylinder block (P) with a cylinder bore (Hc) and a cylinder head (J) with an auxiliary combustion chamber (M), a mouth plate (L) being attached to the cylinder head (J) for closing said auxiliary combustion chamber and being partly supported by a portion of the gasket, the gasket (D) comprising:
an upper plate (D11) having a downwardly curved portion surrounding the cylinder bore, a first middle plate (D12) and a second plate (D13),
sealing means (D16) provided in the downwardly curved portion of said upper plate to surround the cylinder bore and seal said bore,
the first middle plate (D12) extending substantially throughout an entire area of the gasket, said first middle plate having a first hole corresponding to the cylinder bore of the engine (Hc),
the second plate (D13) being adjacent under said first middle plate with a hole corresponding to the cylinder bore (Hc),
said gasket (D) being characterized in that:
said first middle plate (D12) has a concave recess (D12a) near the first hole under a part of the mouth plate (L), said concave recess (D12a) being defined by a curved outer line (D12b) located adjacent to and at a predetermined distance away from the contour of the mouth plate,
an elongated strip (D20) situated at the entrance of the concave recess (D12a) of the first middle plate to form a second hole in the first middle plate defined by the curved outer line (D12b) and an outer line of the elongated strip (D20) and separated from the first hole,
the second plate (D13) is placed under the first middle plate (D12),
a compressible member (D18) is placed in the second hole to support the mouth plate (L), and
said elongated strip (D20), sealing means (D16) and compressible member (D18) constitute means for supporting the mouth plate near the cylinder bore.

8. A steel laminate type cylinder head gasket (A-D) according to any one of preceding claims 1 to 7, characterised in that said compressible member (A18-D18) is basically formed of graphite.

9. A steel laminate type cylinder head gasket (A; B) according to any one of preceding claims 1 to 6 characterised in that said second plate includes a first bead (A13b; B13b) situated along and at a predetermined distance away from the first curved line (A12b) outwardly, and a second bead (A13a; B13a) situated under the elongated strip (A12d; B12d) said first and second beads being interconnected together.

10. A steel laminate type cylinder head gasket (A; B) according to claim 9, characterised in that said second bead (A13a; B13a) extends around the entire cylinder bore.

11. A steel laminate type cylinder head gasket (B; C) according to either claim 5 or claim 6 characterised in that said second plate (B13; C13) includes a first bead (B13b) situated along and at a predetermined distance away from the first curved line outwardly, and a second bead (B13a) situated under the elongated strip (B12d; C12d) said second bead and thin metal plate (B19; C19) together with the elongated strip constituting the supporting means of the mouth plate, said first and second beads being interconnected together.

12. A steel laminate type cylinder head gasket (D) according to claim 7, characterised in that said elongated strip (D20) is formed separately from the first middle plate (D12) and is made of metal plate thicker than said first middle plate.

## Patentansprüche

1. Schichtstahl-Zylinderkopfdichtung (A-C) zum Einbau in einem Verbrennungsmotor zwischen einem Zylinderblock (P) mit einer Zylinderbohrung (Hc) und einem Zylinderkopf (J) mit einer Nebenbrennkammer (M), wobei eine Mundlochplatte (L) am Zylinderkopf (J) angebracht ist, um die genannte Nebenbrennkammer zu verschließen, und teilweise von einem Abschnitt der Dichtung getragen ist, wobei die Dichtung (A-C) die folgenden Merkmale aufweist:
eine obere Platte (A11; B11; C11) mit einem abwärts gekrümmten Abschnitt (A11a), der die Zylinderbohrung umgibt, eine erste mittlere Platte (A12; B12; C12) und eine zweite Platte (A13; B13),
Dichtungsmittel (A16; B16; C16), die im abwärts gekrümmten Abschnitt (A11a) der genannten oberen Platte vorgesehen sind, um die Zylinderbohrung zu umgeben und die genannte Bohrung abzudichten,
die erste mittlere Platte (A12; B12; C12) erstreckt sich im wesentlichen über die gesamte Fläche der Dichtung hinweg, wobei die genannte erste mittlere Platte ein erstes Loch aufweist, das der Zylinderbohrung des Motors (Hc) entspricht,
die zweite Platte (A13; B13; C13) befindet sich nahe unter der genannten ersten mittleren Platte mit einem Loch, das der Zylinderbohrung (Hc) entspricht und mit einer Sicke (A13a; B13a), die sich mindestens teilweise rund um die Zylinderbohrung erstreckt,
die genannte Dichtung (A-C) ist dadurch **gekennzeichnet**, daß:
die erste mittlere Platte (A12; B12; C12) ein zweites Loch (A12a; B12a; C12a) aufweist, das nahe dem ersten Loch unter einem Teil der Mundlochplatte (L) gelegen ist, wobei das genannte zweite Loch von einer ersten, gekrümmten, äußeren Linie (A12b) festgelegt wird, die neben der Kontur der Mundlochplatte und mit einem vorbestimmten Abstand zu dieser angeordnet ist, und einer zweiten, inneren Linie (A12c), die nahe der Zylinderbohrung und unter einem vorbestimmten Abstand zu dieser angeordnet ist, um hierdurch einen länglichen Streifen (A12d; B12d; C12d) zwischen dem ersten und zweiten Loch zu bilden, wobei die zweite Platte (A13; B13; C13) unter der ersten mittleren Platte (A12; B12; C12) angeordnet ist,
ein zusammendrückbares Teil (A18; B18) im zweiten Loch (A12a; B12a; C12a) angeordnet ist, um die Mundlochplatte abzustützen, und
der genannte längliche Streifen (A12d; B12d; C12d), die Dichtungsmittel (A16; B16; C16) und das zusammendrückbare Teil (A18; B18) Mittel zum Abstützen der Mundlochplatte nahe der Zylinderbohrung bilden.

2. Schichtstahl-Zylinderkopfdichtung (A-C) nach Anspruch 1, dadurch **gekennzeichnet**, daß die genannte Sicke (A13a, B13a) der zweiten Platte (A13; B13; C13) unter dem länglichen Streifen (A12d; B12d; C12d) angeordnet ist.

3. Schichtstahl-Zylinderkopfdichtung (A-C) nach entweder Anspruch 1 oder Anspruch 2, dadurch **gekennzeichnet**, daß die genannte Sicke (A13a; B13a) sich rund um die gesamte Zylinderbohrung (Hc) erstreckt.

4. Schichtstahl-Zylinderkopfdichtung nach irgendeinem der vorangehenden Ansprüche 1 bis 3, dadurch **gekennzeichnet**, daß die genannten Dichtungsmittel (A16; B16; C16) ein Drahtring sind, der zwischen dem gekrümmten Abschnitt (A11a) und der ersten mittleren Platte (A12; B12; C12) gelegen ist.

5. Schichtstahl-Zylinderkopfdichtung (B; C) nach irgendeinem der vorangehenden Ansprüche 1 bis 4, dadurch **gekennzeichnet**, daß sie ferner ein dünnes Metallblech (B19; C19) mit einer Größe aufweist, die mindestens gleich ist der Größe des länglichen Streifens (B12d; C12d), wobei das genannte dünne Metallblech (B19; C19) als Schicht über dem länglichen Streifen aufgebracht ist.

6. Schichtstahl-Zylinderkopfdichtung (C) nach Anspruch 5, dadurch **gekennzeichnet**, daß sich das genannte dünne Metallblech (C19) rund um die gesamte Zylinderbohrung (Hc) erstreckt.

7. Schichtstahl-Zylinderkopfdichtung (D) zum Einbau in einen Verbrennungsmotor zwischen einem Zylinderblock (P) mit einer Zylinderbohrung (Hc) und einem Zylinderkopf (J) mit einer Nebenbrennkammer (M), wobei eine Mundlochplatte (L) am Zylinderkopf (J) angebracht ist, um die genannte Nebenbrennkammer zu verschließen, und teilweise von einem Abschnitt der Dichtung abgestützt ist, wobei die Dichtung (D) die folgenden Merkmale aufweist:
eine obere Platte (D11) mit einem abwärts gekrümmten Abschnitt, der die Zylinderbohrung umgibt, eine erste mittlere Platte (D12) und eine zweite Platte (D13),
Dichtungsmittel (D16), die im abwärts gekrümmten Abschnitt der genannten oberen Platte vorgesehen sind, um die Zylinderbohrung zu umgeben und die genannte Bohrung abzudichten,
die erste mittlere Platte (D12) erstreckt sich im wesentlichen über die gesamte Fläche der Dichtung, wobei die genannte erste mittlere Platte ein erstes Loch aufweist, das der Zylinderbohrung des Motors (Hc) entspricht,
die zweite Platte (D13) befindet sich benachbart unter der genannten ersten mittleren Platte mit einem Loch, das der Zylinderbohrung (Hc) entspricht,
wobei die genannte Dichtung (D) dadurch **gekennzeichnet** ist, daß:
die genannte erste mittlere Platte (D12) eine konkave Ausnehmung (D12a) nahe dem ersten Loch unter einem Teil der Mundlochplatte (L) aufweist, wobei die genannten konkave Ausnehmung (D12a) von einer gekrümmten äußeren Linie (D12b) festgelegt wird, die nahe der Kontur der Mundlochplatte in einem vorbestimmten Abstand zu dieser angeordnet ist,
ein länglicher Streifen (D20) am Einlaß der konkaven Ausnehmung (D12a) der ersten mittleren Platte gelegen ist, um ein zweites Loch in der ersten mittleren Platte zu bilden, das von der gekrümmten äußeren Linie (D12b) und einer äußeren Linie des länglichen Streifens (D20) festgelegt ist und vom ersten Loch getrennt ist,
die zweite Platte (D13) unter der ersten mittleren Platte (D12) angeordnet ist,
ein zusammendrückbares Teil (D18) im zweiten Loch angeordnet ist, um die Mundlochplatte (L) abzustützen, und
der genannte längliche Streifen (D20), die Dichtungsmittel (D16) und das zusammendrückbare Teil (D18) die Mittel zum Abstützen der Mundlochplatte nahe der Zylinderbohrung bilden.

8. Schichtstahl-Zylinderkopfdichtung (A-D) nach irgendeinem der vorangehenden Ansprüche 1 bis 7, dadurch **gekennzeichnet**, daß das genannte zusammendrückbare Teil (A18-D18) grundlegend aus Graphit gebildet ist.

9. Schichtstahl-Zylinderkopfdichtung (A; B) nach irgendeinem der vorangehenden Ansprüche 1 bis 6, dadurch **gekennzeichnet**, daß die genannte zweite Platte eine erste Sicke (A13b; B13b) umfaßt, die längs der ersten gekrümmten Linie (A12b) und in einem vorbestimmten Abstand davon nach außen gelegen ist, und eine zweite Sicke (A13a; B13a), die unter dem länglichen Streifen (A12d; B12d) gelegen ist, wobei die genannte erste und zweite Sicke miteinander in Verbindung stehen.

10. Schichtstahl-Zylinderkopfdichtung (A; B) nach Anspruch 9, dadurch **gekennzeichnet**, daß die genannte zweite Sicke (A13a; B13a) sich rund um die genannte Zylinderbohrung erstreckt.

11. Schichtstahl-Zylinderkopfdichtung (B; C) nach entweder Anspruch 5 oder Anspruch 6, dadurch **gekennzeichnet**, daß die genannte zweite Platte (B13; C13) eine erste Sicke (B13b) umfaßt, die längs der ersten gekrümmten Linie und in einem vorbestimmten Abstand von dieser nach außen entfernt gelegen ist, und eine zweite Sicke (B13a), die unter dem länglichen Streifen (B12d; C12d) gelegen ist, wobei die genannte zweite Sicke und das dünne Metallblech (B19; C19) zusammen mit dem länglichen Streifen die Abstützmittel der Mundlochplatte bilden, und wobei die genannte erste und zwei Sicke miteinander verbunden sind.

12. Schichtstahl-Zylinderkopfdichtung (D) nach Anspruch 7, dadurch **gekennzeichnet**, daß der genannte längliche Streifen (D20) getrennt von der ersten mittleren Platte (D12) ausgebildet und aus einer Metallplatte hergestellt ist, die dicker ist als die genannte erste mittlere Platte.

## Revendications

1. Joint de tête de cylindre (A à C) du type en acier stratifié destiné à être installé dans un moteur à combustion interne entre un bloc cylindre (P) muni d'un alésage de cylindre (Hc) et une tête de cylindre (J) ayant une chambre de combustion auxiliaire (M), une plaque d'embouchure (L) étant fixée sur la tête de cylindre (J) pour fermer ladite chambre de combustion auxiliaire et étant partiellement supportée par une partie du joint, le joint (A à C) comportant:
une plaque supérieure (A11; B11; C11) ayant une partie incurvée vers le bas (A11a) entourant l'alésage de cylindre, une première plaque médiane (A12; B12; C12), et une seconde plaque (A13; B13),
des moyens d'étanchéité (A16; B16; C16) agencés dans la partie incurvée vers le bas (A11a) de ladite plaque supérieure pour entourer l'alésage de cylindre et assurer l'étanchéité dudit alésage,
la première plaque médiane (A12; B12; C12) s'étendant pratiquement sur toute la surface du joint, ladite première plaque médiane ayant un premier trou correspondant à l'alésage de cylindre (Hc) du moteur,
la seconde plaque (A13; B13; C13) étant adjacente sous ladite première plaque médiane, en ayant un trou correspondant à l'alésage de cylindre (Hc) et en ayant un bourrelet (A13a; B13a) s'étendant au moins partiellement autour de l'alésage de cylindre,
ledit joint (A à C) étant caractérisé en ce que:
la première plaque médiane (A12; B12; C12) comporte un second trou (A12a; B12a; C12a) adjacent au premier trou et situé sous une partie de la plaque d'emhouchure (L), ledit second trou étant défini par une première ligne extérieure incurvée (A12b) , adjacente au contour de la plaque d'embouchure et éloignée d'une distance prédéterminée de celle-ci et une seconde ligne intérieure (A12c) adjacente à l'alésage de cylindre et éloignée d'une distance prédéterminée de celui-ci pour former par conséquent une bande allongée (A12d; B12d; C12d) entre le premier et le second trous, la seconde plaque (A13; B13; C13) étant placée sous la première plaque médiane (A12; B12; C12),
un élément compressible (A18; B18) est placé dans le second trou (A12a; B12a; C12a) pour supporter la plaque d'embouchure et
ladite bande allongée (A12d; B12d; C12d), les moyens d'étanchéité (A16; B16; C16) et l'élément compressible (A18; B18) constituent des moyens pour supporter la plaque d'embouchure à proximité de l'alésage de cylindre.

2. Joint de tête de cylindre (A à C) du type en acier stratifié selon la revendication 1, caractérisé en ce que ledit bourrelet (A13a; B13a) de la seconde plaque (A13; B13; C13) est situé sous la bande allongée (A12d; B12d; C12d).

3. Joint de tête de cylindre (A à C) du type en acier stratifié selon la revendication 1 ou 2, caractérisé en ce que ledit bourrelet (A13a; B13a) s'étend autour de la totalité de l'alésage de cylindre (Hc).

4. Joint de tête de cylindre du type en acier stratifié selon l'une quelconque des revendications 1 à 3, caractérisé en ce que lesdits moyens d'étanchéité (A16; B16; C16) sont constitués d'un anneau de fil situé entre la partie incurvée (A11a) et la première plaque médiane (A12; B12; C12).

5. Joint de tête de cylindre (B; C) du type en acier stratifié selon l'une quelconque des revendications 1 à 4, caractérisé en ce qu'il comporte en outre une plaque métallique mince (B19; C19) ayant une dimension au moins égale à la dimension de la bande allongée (B12d; C12d), ladite plaque métallique mince (B19; C19) étant stratifiée sur la bande allongée.

6. Joint de tête de cylindre (C) du type en acier stratifié selon la revendication 5, caractérisé en ce que ladite plaque métallique mince (C19) s'étend autour de la totalité de l'alésage de cylindre (Hc).

7. Joint de tête de cylindre (D) du type en acier stratifié destiné à être installé dans un moteur à combustion interne entre un bloc cylindre (P) muni d'un alésage de cylindre (Hc) et une tête de cylindre (J) ayant une chambre de combustion auxiliaire (M), une plaque d'embouchure (L) étant fixée sur la tête de cylindre (J) pour fermer ladite chambre de combustion auxiliaire et étant partiellement supportée par une partie du joint, le joint (D) comportant:
une plaque supérieure (D11) ayant une partie incurvée vers le bas entourant l'alésage de cylindre, une première plaque médiane (D12), et une seconde plaque (D13),
des moyens d'étanchéité (D16) agencés dans la partie incurvée vers le bas de ladite plaque supérieure pour entourer l'alésage de cylindre et assurer l'étanchéité dudit alésage,
la première plaque médiane (D12) s'étendant pratiquement sur toute la surface du joint, ladite première plaque médiane ayant un premier trou correspondant à l'alésage de cylindre (Hc) du moteur,
la seconde plaque (D13) étant adjacente sous ladite première plaque médiane, et ayant un trou correspondant à l'alésage de cylindre (Hc),
ledit joint (D) étant caractérisé en ce que:
ladite première plaque médiane (D12) comporte un creux concave (D12a) à proximité du premier trou sous une partie de la plaque d'embouchure (L), ledit creux concave (D12a) étant défini par une ligne extérieure incurvée (D12b), adjacente au contour de la plaque d'embouchure et éloignée d'une distance prédéterminée de celle-ci,
une bande allongée (D20) située au niveau de l'entrée du creux concave (D12a) de la première plaque médiane pour former un second trou dans la première plaque médiane, défini par la ligne extérieure incurvée (D12b) et une ligne extérieure de la bande allongée (D20) et séparé du premier trou,
un élément compressible (D18) est placé dans le second trou pour supporter la plaque d'embouchure (L) et
ladite bande allongée (D20), les moyens d'étanchéité (D16) et l'élément compressible (D18) constituent des moyens pour supporter la plaque d'embouchure à proximité de l'alésage de cylindre.

8. Joint de tête de cylindre (A à D) du type en acier stratifié selon l'une quelconque des revendications 1 à 7, caractérisé en ce que ledit élément compressible (A18 à D18) est constitué à base de graphite.

9. Joint de tête de cylindre (A; B) du type en acier stratifié selon l'une quelconque des revendications 1 à 6, caractérisé en ce que ladite seconde plaque comporte un premier bourrelet (A13b; B13b) situé le long de la première ligne incurvée (A12b) et à une distance prédéterminée en s'éloignant vers l'extérieur à partir de celle-ci, et un second bourrelet (A13a; B13a) situé sous la bande allongée (A12d; B12d), ledit premier et ledit second bourrelets étant reliés mutuellement.

10. Joint de tête de cylindre (A ;B) du type en acier stratifié selon la revendication 9, caractérisé en ce que ledit second bourrelet (A13a; B13a) s'étend autour de la totalité de l'alésage de cylindre.

11. Joint de tête de cylindre (B; C) du type en acier stratifié selon la revendication 5 ou 6, caractérisé en ce que ladite seconde plaque (B13; C13) comporte un premier bourrelet (B13b) situé le long de la première ligne incurvée et à une distance prédéterminée en s'éloignant vers l'extérieur à partir de celle-ci, et un second bourrelet (B13a) situé sous la bande allongée (B12d; C12d), ledit second bourrelet et la plaque métallique mince (B19; C19), associés à la bande allongée, constituant les moyens de support de la plaque d'embouchure, lesdits premier et second bourrelets étant reliés mutuellement.

12. Joint de tête de cylindre (D) du type en acier stratifié selon la revendication 7, caractérisé en ce que ladite bande allongée (D20) est formée de manière séparée de la première plaque médiane (D12) et est constituée d'une plaque métallique plus épaisse que ladite première plaque médiane.
